(19) Europäisches Patentamt
European Patent Office
Office européen des brevets

(11) **EP 4 776 228 A1**

(12) **EUROPEAN PATENT APPLICATION**

(43) Date of publication:
**15.07.2026 Bulletin 2026/29**

(21) Application number: **25305036.3**

(22) Date of filing: **14.01.2025**

(51) International Patent Classification (IPC):
**G06T 13/00** (2011.01)    **G06T 17/00** (2006.01)
**H04N 21/81** (2011.01)    **H04N 21/854** (2011.01)

(52) Cooperative Patent Classification (CPC):
**H04N 21/816; G06T 13/40; H04N 21/44012;
H04N 21/85406**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **GOSSELIN, Philippe Henri
35235 THORIGNE-FOUILLARD (FR)**
• **AVRIL, Quentin
35830 BETTON (FR)**
• **COVA REGATEIRO, João Pedro
35220 CHATEAUBOURG (FR)**
• **LE CLERC, Francois
35590 L'HERMITAGE (FR)**

(74) Representative: **Vossius & Partner
Patentanwälte Rechtsanwälte mbB
Siebertstraße 3
81675 München (DE)**

(54) **CONTROLLERS SIGNALING IN MPEG AVATAR REPRESENTATION FORMAT**

(57)    Some embodiments of a method may include obtaining a MPEG Avatar Representation Format (ARF)-based file, wherein the MPEG ARF-based file comprises a list identifying one or more controller sets of an avatar, wherein each of the one or more controller sets comprise one or more controllers, and wherein each of the one or more controllers comprise a list of one or more channels; verifying the MPEG ARF-based file comprises information corresponding to the one or more channels; parsing the information corresponding to the one or more channels into one or more respective channel data structures; and controlling a component of an avatar using at least one of the one or more channel data structures.

FIG. 7

EP 4 776 228 A1

**Description**

**INCORPORATION BY REFERENCE**

The present application incorporates by reference in their entirety the following applications: European Patent Application Serial No. EP23305405, entitled "Avatar signaling on MPEG-I Scene Description" and filed March 24, 2023 ("'405 application"); International Patent Application Serial No. PCT/EP2024/057092, entitled "Avatar Signaling on MPEG-I Scene Description" and filed March 15, 2024 ("'092 application"); European Patent Application Serial No. EP23306167, entitled "Controllers on MPEG-I Scene Description" and filed July 10, 2023 ("'167 application"); International Patent Application Serial No. PCT/EP2024/068034, entitled "Controllers on MPEG-I Scene Description" and filed June 26, 2024 ("'034 application"); European Patent Application Serial No. EP24305094, entitled "Avatar JSON Interchange File Format" and filed January 15, 2024 ("'094 application"); International Patent Application Serial No. PCT/EP2024/078214, entitled "Avatar JSON Interchange File Format" and filed October 8, 2024 ("'214 application"); European Patent Application Serial No. EP24305458, entitled "Avatars Controllers in Scene Descriptions" and filed March 27, 2024 ("'458 application"); and European Patent Application Serial No. EP24306850, entitled "Controllers in MPEG Avatar Representation Format" and filed November 1, 2024 ("'850 application").

**BACKGROUND**

The present application is related to avatars.

**SUMMARY**

An example method in accordance with some embodiments may include: obtaining a MPEG Avatar Representation Format (ARF)-based file, wherein the MPEG ARF-based file includes a list identifying one or more controller sets of an avatar, wherein each of the one or more controller sets include one or more controllers, and wherein each of the one or more controllers include a list of one or more channels; verifying the MPEG ARF-based file includes information corresponding to the one or more channels; parsing the information corresponding to the one or more channels into one or more respective channel data structures; and controlling a component of an avatar using at least one of the one or more channel data structures.

For some embodiments of the example method, the MPEG ARF-based file includes a controllers component, and the controllers component is the list identifying the one or more controller sets of the avatar.

For some embodiments of the example method, each of the one or more controller sets of the avatar include a unique controller set identifier, and each of the unique controller set identifiers indicates an identity of the respective controller set.

For some embodiments of the example method, each of the one or more controllers include a unique controller identifier, and each of the unique controller identifiers indicates an identity of the respective controller.

For some embodiments of the example method, each of the one or more channel data structures include a weight, a range, and a target of the respective channel data structure.

Some embodiments of the example method may further include parsing at least one of the one or more channel data structures based on the target of the respective channel data structure

Some embodiments of the example method may further include identifying the target of one of the one or more channel data structures as indicating a blendshape channel; and parsing blendshape data in the corresponding channel data structure.

Some embodiments of the example method may further include: identifying the target of one of the one or more channel data structures as indicating a joint channel; and parsing joint data in the corresponding channel data structure.

Some embodiments of the example method may further include: identifying the target of one of the one or more channel data structures as indicating a controller channel; and parsing controller data in the corresponding channel data structure.

Some embodiments of the example method may further include combining data from two or more of the channel data structures to generate a combined blendshape for an asset of the avatar.

Some embodiments of the example method may further include combining data from two or more of the channel data structures to generate a combined joint for an asset of the avatar.

Some embodiments of the example method may further include combining data from two or more of the channel data structures to generate a combined skin for an asset of the avatar.

Some embodiments of the example method may further include combining data from two or more of the channel data structures to generate a combined controller for an asset of the avatar.

Some embodiments of the example method may further include: obtaining, from the MPEG ARF-based file, two or more weights corresponding to an avatar asset controller; combining the two or more weights corresponding to the controller; and controlling an asset of the avatar with the avatar asset controller using the combined weights.

An example apparatus in accordance with some embodiments may include: a processor; and a memory storing instructions operative, when executed by the processor, to cause the apparatus to perform the method of any one of the methods listed above.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a system diagram illustrating an example set of interfaces for a system according to some embodiments.

FIG. 2 is a schematic illustration showing an example set of MPEG ARF main properties according to some embodiments.

FIG. 3 is a schematic illustration showing an example avatar moving eye gaze from right to left according to some embodiments.

FIG. 4 is a schematic illustration showing an example avatar moving eye gaze from bottom to top according to some embodiments.

FIG. 5 is a flowchart illustrating an example process for parsing of an LOD object with the "controllers" property according to some embodiments.

FIG. 6 is a flowchart illustrating an example process for parsing of a ControllerSet object according to some embodiments.

FIG. 7 is a flowchart illustrating an example process for parsing of a Controller object according to some embodiments.

FIG. 8 is a flowchart illustrating an example process for parsing a Channel object according to some embodiments.

FIG. 9 is a flowchart illustrating an example process for parsing a MPEG ARF-based file according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "in at least one embodiment, ...." For brevity and clarity of presentation, this implied leading clause is not repeated *ad nauseum* in the detailed description.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

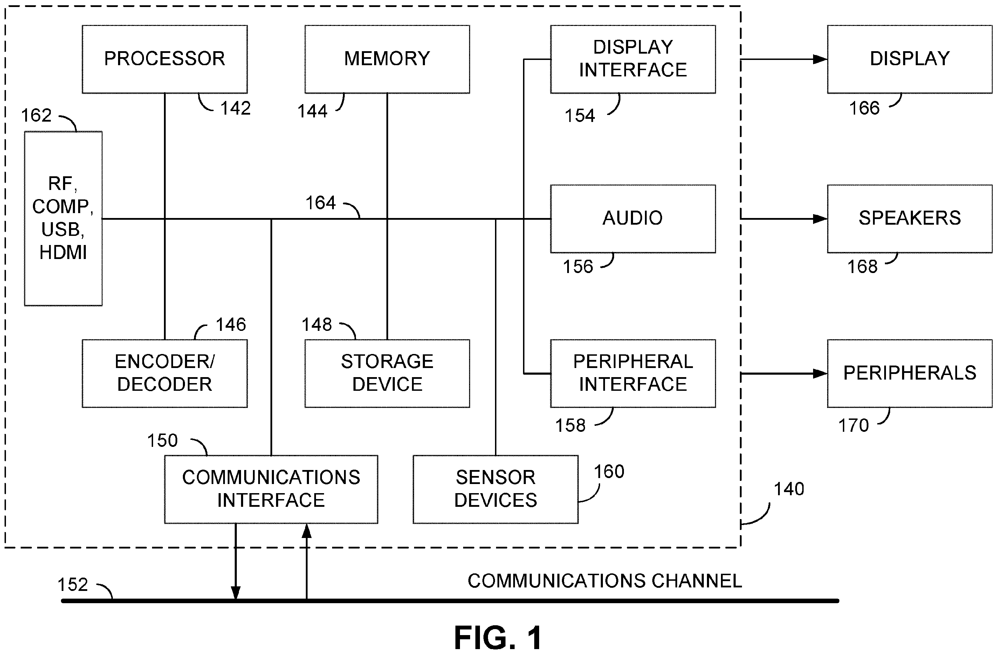

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application relates to the encoding of avatar controllers in the MPEG Avatar Representation Format (ARF) for some embodiments. Controllers are a generalization of morph targets (also called blendshapes) which allow more complex transform than a single linear deformation of a mesh. ARF was introduced in MPEG-I Scene Description through the input contribution m69882 to MPEG meeting #148 and currently improved with output document N01398.

Using the current MPEG-I Scene Description (SD) format and the "MPEG_controllers" extension introduced in the '167 application, a set of controllers with weights may be encoded in a glTF file. Then, using the "MPEG_node_avatar" extension introduced in the '405 application, one or more avatars may be defined in a glTF file. Using the "controllersets" property of "MPEG_node_avatar" extension introduced in the '458 application, controllers of an avatar with semantic properties (description, mapping and purpose) may be signaled in a glTF file. Such information may also be signaled using AJIF introduced by the '094 application.

Considering MPEG ARF, the '850 application allows the signaling of an avatar with controllers, in which controllers are encoded in a different file, such as glTF with MPEG_node_avatar extension or AJIF.

In many cases, the encoding of controllers depends on a generic hierarchical representation of data. Representations are based on generic nodes, which may be of various kinds, such as a geometry or a joint. However, MPEG ARF does not contain such generic representations and spreads data in different containers (such as one for geometries, one for blendshapes, and one for joints). As a result, the encoding of controllers may accurately locate which component is modified by each channel, rather than referencing a generic node.

### Animation streaming format

A specificity of MPEG ARF is the signaling of expected streaming animation formats. Such a signal informs the decoder that the avatar may be animated following a specific list of animation controls, each one being associated with a weight. For instance, an avatar may be animated using one of the OpenXR animation streaming formats.

To signal such an avatar, a first use case converts its components to match an animation streaming format. For example, the first animation component in the streaming format may be a blendshape for animating the eyebrows. To use this format, the avatar may be signaled with a blendshape set in which the first one animates the eyebrows. This use case is fine as long as the avatar may be converted. For instance, if the avatar is also used for other purposes than animation (like character creation in a game or the stitching of accessories), the conversion might break these other features. Furthermore, this use case is not efficient if the avatar has to support several animation streaming formats: each format might need specific converted data, which must be signaled, resulting in large memory usage.

The present application discusses signal controller sets, which may use controls from other sets. Consequently, a main independent controller set may be signaled as well as additional controller sets for each animation streaming format. The additional controller sets may use controls from the main controller set to create new combinations of controls with small memory overhead. For instance, if a main controller set has a controller for left eyebrows and a controller for right eyebrows, an additional controller set may have controller for both eyebrows which combines the two controllers from the main controller set.

### MPEG ARF

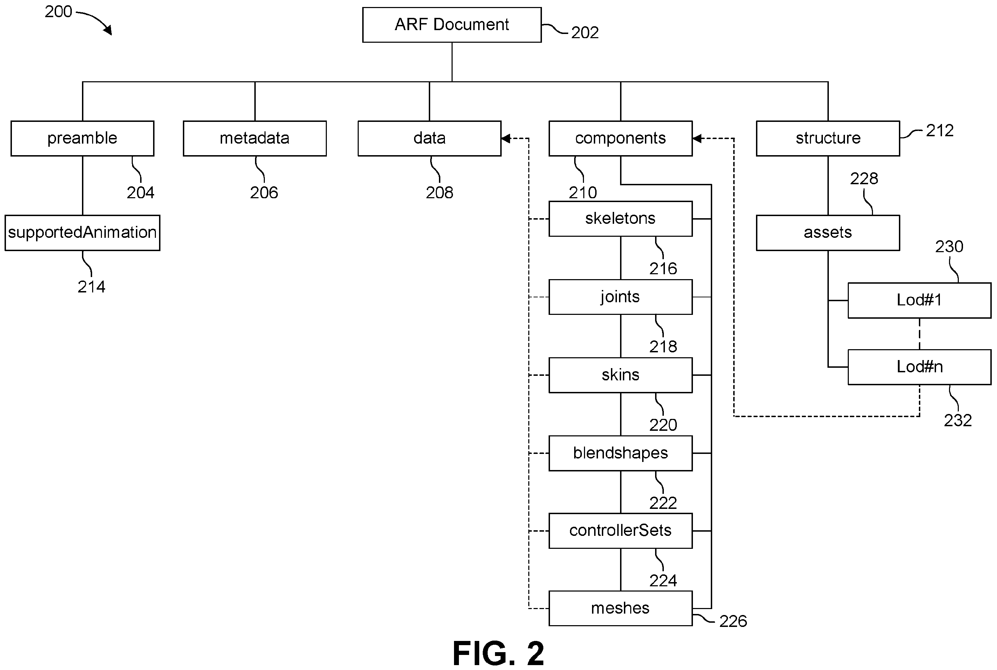

FIG. 2 is a schematic illustration showing an example set of MPEG ARF main properties according to some embodiments. MPEG ARF may be amended to use a set of containers regrouped into categories as shown in FIG. 1, but as of the writing of the present application, the ControllerSets property data structure, for example, is not in the MPEG ARF specification.

The example structure 200 has an ARF document 202 and several categories of containers hanging off the ARF document.

The "preamble" container 204 is used to uniquely identify the format and characteristics of the file. In particular, the "preamble" container 204 contains a "supportedAnimation" property 214 which lists the streaming animation formats that the file supports.

The "metadata" container 206 contains main information, such as age or gender, of the avatar.

The "data" container 208 contains low-level data, like arrays of values, tensors, or references to external files. Items of the "data" container 208 are referenced by components.

The "components" container 210 contains several component containers (skeletons 216, joints 218, skins 220, blendshapes 222, controllerSets 224, and meshes 226), which are dedicated to a type of component. The present application introduces the "controllerSets" component 224 to signal the controller sets of the avatar. The "controllerSets" component 224 contains the *ControllerSet* list, which is defined later in this application.

The "structure" container 212 contains the "assets" component 228, which defines the components for an avatar part (body, hand, head, ...) for a level of detail (LOD) 230, 232.

**LOD with a Controller Set**

The Level of Detail (LOD) object provides a link to all components of an asset at a specific level of detail. Table 1 lists properties of an LOD object.

**Table 1.**

| Name | Type | Use | Description |
|------|------|-----|-------------|
| name | string | M | The name of the LOD. |
| skins | array(number) | M | List of references to all skins that are part of this asset. |
| meshes | array(number) | M | List of non-skinned meshes that are part of this asset. |
| skeletons | array(number) | M | List of references to skeletons in the ARF container. |
| blendshapes | array(number) | M | List of references to blendshape sets in the ARF container. |
| controllers | array(number) | M | List of references to controller sets in the ARF container. Each value in the list is an identifier of a controller set. |

The "controllers" property is introduced to allow for referencing of all controller sets used by the LOD.

**Signaling a Controller Set**

Table 2 lists properties of a ControllerSet object.

**Table 2.**

| Name | Type | Use | Description |
|------|------|-----|-------------|
| name | string | O | The name of the controller set. |
| id | integer | M | A unique identifier of the controller set. |
| description | string | O | The description of the controller set. |
| purpose | string | O | The purpose of the controller set. |
| controllers | array(Controller) | M | The list of controllers. |
| weights | array(number) | O | Default controller weights. |

The "name" property defines the name of the avatar controller set.

The "id" property defines a unique integer for identifying the avatar controller set. The "id" property is understood to be a new property not mentioned in other applications.

The "description" property describes the avatar controller set and its usage. This is only illustrative, for example, it may be used in a user interface to help the user understand what the controller set was intended for.

The "purpose" property contains a string that identifies the purpose of the avatar controller set. It must follow predetermined values, defined by an application or a standard. In some embodiments, the type of this property is an enum.

The "controllers" list defines the controllers to use and how to use them (see next section).

The "weights" property defines the default controller weights to use. The length of this array must be equal to the number of items in "controllers".

**Signaling a controller**

Table 3 lists properties of a Controller object.

**Table 3.**

| Name | Type | Use | Description |
|---|---|---|---|
| name | string | O | The name of the controller. |
| id | integer | M | A unique identifier of the controller. |
| description | string | O | The description of the controller. |
| purpose | string | O | The purpose of the controller. |
| channels | array(Channel) | M | The list of controller channels. |
| range | number[2] | O | Minimum and maximum values for the controller weight. |
| weight | number | O | The controller weight must be multiplied by this value. Default is 1.0. |

The "name" property defines the name of the controller.

The "id" property defines a unique integer for identifying the controller. This property is understood to be a new property not mentioned in other applications.

The "description" property describes the controller and its usage. This property is only illustrative. For example, the "description" property may be used in a user interface to help the user understand what the controller was intended for.

The "purpose" property contains a string that identifies the purpose of the controller. The "purpose" property follows predetermined values, defined by an application or a standard. In some embodiments, the type for this property is an enumeration (enum).

The "channels" property contains the list of channels for this controller (see next section).

The "range" property defines the minimum and maximum value the controller weight may get. If not defined, these extrema are defined by the "range" properties or deduced from the input values of the channels.

The "weight" property defines a value by which to multiply the initial controller weight. If the initial controller weight is $w_i$ and the value of the "weight" property is $w_c$, then the resulting controller weight to use is $w_i w_c$. The "weight" property may be used to combine controllers. For instance, if $w_c = 0.5$ and the controller has two channels referencing two other controllers, then the result is the average of the two referenced controllers. The "weight" property is understood to be a new property not mentioned in other applications.

**Signaling a channel**

Table 4 lists properties of a Channel object.

**Table 4.**

| Name | Type | Use | Description |
|---|---|---|---|
| weight | number | O | The channel weight must be multiplied by this value. Default is 1.0. |
| range | number[2] | O | Minimum and maximum values for the channel weight. |
| input | integer | M | The identifier of a data component with the input values. |
| interpolation | enum | O | The interpolation method (INTERPOLATION_LINEAR, INTERPOLATION_STEP or INTERPOLATION_CUBICSPLINE). Default is INTERPOLATION_LINEAR. |

8

(continued)

| Name | Type | Use | Description |
|---|---|---|---|
| output | integer | M | The identifier of a data component with the output values |
| target | enum | M | Defines the target of the channel (CHANNEL_BLENDSHAPE, CHANNEL JOINT, CHANNEL JOINT_ROTATION, CHANNEL JOINT_SCALE, CHANNEL JOINT TRANSLATION or CHANNEL_CONTROLLER). |
| if (target == CHANNEL_BLENDSHAPE) { | | | |
| blendshapeSet | integer | M | The identifier of a blendshape set. |
| blendshapeShape | integer | M | The index of a shape in the blendshape set. |
| } else if (target == CHANNEL_JOINT or target == CHANNEL _JOiNT_ROTATiON or target == CHANNEL_JOINT_SCALE or target == CHANNEL_JOINT_TRANSLATION) { | | | |
| skin | integer | O | The identifier of a skin. |
| joint | integer | M | The identifier of a joint. |
| } else if (target == CHANNEL_CONTROLLER) { | | | |
| controllerSet | integer | O | The identifier of a controller set (default same set). |
| controller | integer | M | The identifier of a controller in the controller set. |
| } | | | |

All properties in Table 4 except for "input", "interpolation", and "output" are understood to be introduced by this application. The "input", "interpolation", and "output" properties define a function which, given a channel weight w, returns k values shown in Eq. 1:

$$f(w) \rightarrow R^k \qquad (1)$$

As shown in Eq. 2, the value of w depends on the initial controller weight $w_i$ (defined by a user, for instance), the weight $w_c$ defined in the controller that contains this channel, and the weight $w_h$ defined by the "weight" property of the channel:

$$w = clip(w_i w_c w_h) \qquad (2)$$

The $clip()$ function ensures that the weight w is inside the valid range of the controller weight. This range is defined by the "range" property of the channel or by the minimum and maximum values of the "input" property.

The weight $w_h$ defined by the "weight" property of the channel may be used for creating a weighted combination of controllers (for instance).

The number of values (k) returned by the function depends on the target of the channel defined by the "target" property.

If the "target" property is CHANEL_BLENDSHAPE, the target of the channel is a blendshape identified by the "blendshapeSet" and "blendshapeShape" properties. The number of values (k) returned by the function is 1 (e.g., the weight of the blendshape).

If the "target" property is CHANEL_JOINT, the target of the channel is the transform matrix of a joint identified by the "joint" property. The skinning used to update the vertices is the one referenced by the "skin" property (if present). The number of values (k) returned by the function is 16 (e.g., the 4x4 matrix transform).

If the "target" property is CHANEL JOINT_ROTATION, the target of the channel is the rotation of a joint identified by the "joint" property. The skinning used to update the vertices is the one referenced by the "skin" property (if present). The number of values (k) returned by the function is 4 (e.g., the quaternion rotation).

If the "target" property is CHANEL_JOINT_SCALE, the target of the channel is the scale of a joint identified by the "joint" property. The skinning used to update the vertices is the one referenced by the "skin" property (if present). The number of values (k) returned by the function is 3 (e.g. the X, Y, and Z scale factors).

If the "target" property is CHANEL_JOINT_TRANSLATION, the target of the channel is a joint identified by the "joint" property. The skinning used to update the vertices is the one referenced by the "skin" property (if present). The number of values (k) returned by the function is 3 (e.g., the X, Y, and Z translations).

If the "target" property is CHANEL_CONTROLLER, the target of the channel is a controller identified by the "controllerSet" (same controller set as the controller of this channel if not defined) and "controller" properties. The number of values (k) returned by the function is 1.

The "input", "interpolation", and "output" properties encode the value of the function following an approach similar to one of the animations in gITF. For some embodiments, the "input", "interpolation", and "target" properties are properties of a channel.

The "input" property references a list of weight key values (like time of keyframes in gITF). These values are in increasing order. As a result, the first input value defines the lowest possible weight (minimum), and the last input value defines the highest possible weight (maximum), which may be modified by the "range" properties of the channel and the controller.

The "output" property references a list of target values (e.g., vectors of dimension k) for each input value.

**ARF schemas example**

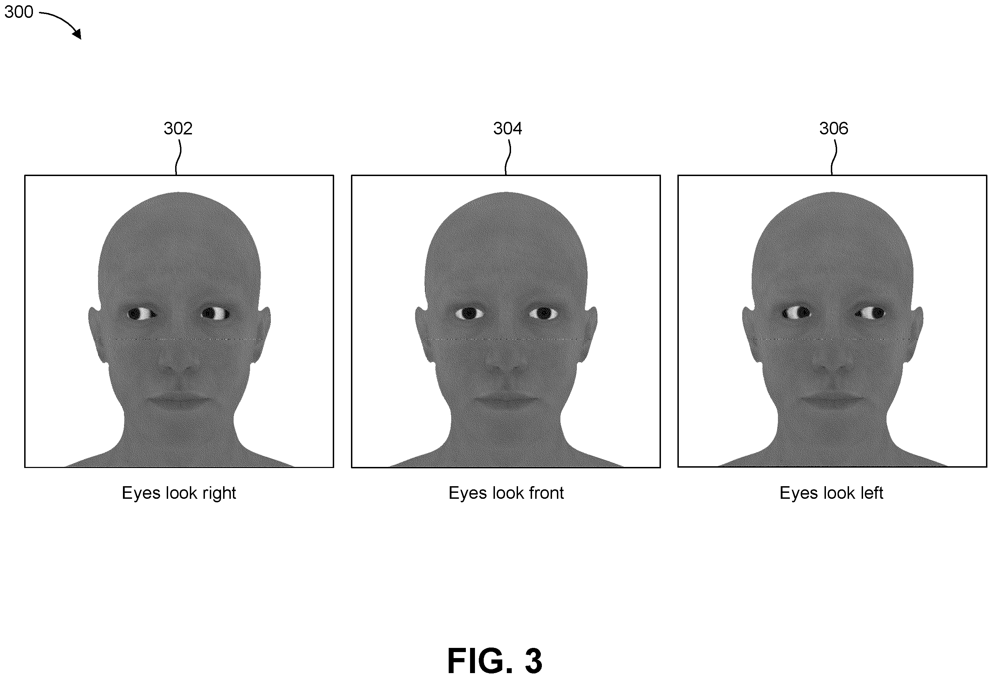

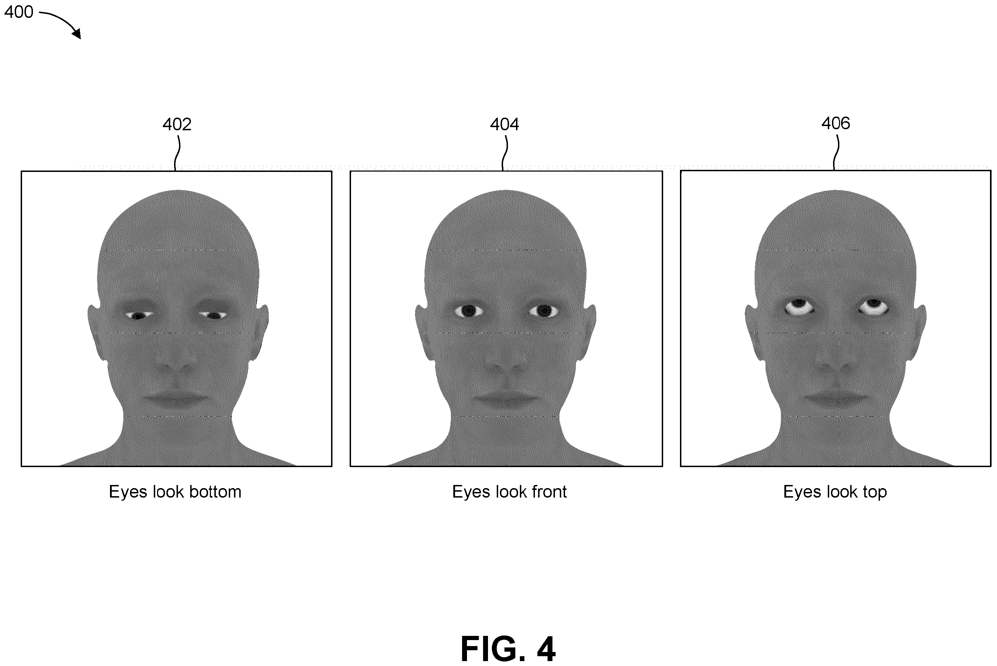

FIG. 3 is a schematic illustration showing an example avatar moving eye gaze from right to left according to some embodiments. FIG. 4 is a schematic illustration showing an example avatar moving eye gaze from bottom to top according to some embodiments.

In this example, which encompasses FIGs. 3 and 4, two controllers are used to control the eyes of an avatar using two controllers: the first one (e.g., controller id 6011) controls the horizontal movements, and the second one (e.g., controller id 6012) controls the vertical movements. The controllers change the eyes rotations, and the weights of the two morph targets correspond to eyelid movements. FIG. 3 shows controller id 6011, which moves the eye gaze from right to left. FIG. 4 shows controller id 6012, which moves the eye gaze from bottom to top.

An avatar may have several assets. A head mesh may have an id of 1001.

A blendshape set (id 2001) may have four blendshapes. Index 0 with a name of "AU61_Eyes_turn_L" may be an animation for eyelids with a movement to the left. Index 1 with a name of "AU61_Eyes_turn_R" may be an animation for eyelids with a movement to the right. Index 2 with a name of "AU63_eyeUp" may be an animation for eyelids with a movement to the top. Index 3 with a name of "AU63_eyeDown" may be an animation for eyelids with a movement to the bottom.

A skeleton (id 4001) may have three joints: a head joint (id 3001), a left eye joint (id 3002), and a right eye joint (id 3003).

A skin (id 5001) may be used to animate the mesh using the skeleton.

A controller set (id 6001) may have two controllers for gaze: horizontal gaze animation (id 6011) and for vertical gaze animation (id 6012).

A controller for horizontal gaze animation (id 6011) may have four channels. Index 0 animates the eyelids using the blendshape 0. Index 1 animates the eyelids using the blendshape 1. Index 2 rotates horizontally the left eye using the left eye joint. Index 3 rotates horizontally the right eye using the right eye joint.

A controller for vertical gaze animation (id 6012) may have four channels. Index 0 animates the eyelids using the blendshape 2. Index 1 animates the eyelids using the blendshape 3. Index 2 rotates vertically the left eye using the left eye joint. Index 3 rotates vertically the right eye using the right eye joint.

Code Listing 1 shows an example of how to encode / structure the data for the avatar and the associated controllers.

```
{
    "preamble": {
        "signature": "QSHD9824JF",
        "version": "1.0",
        "supportedAnimation": {
            "faceAnimation": ["urn:example:eyegaze"],
            "bodyAnimation": [],
            "handAnimation": []
        }
    },
    "metadata": {
        "name": "Morgan",
        "id": "MPEGMorgan",
        "age": 25,
        "gender": "neutral"
    },
    "structure": {
        "assets": [
```

```
            {
                "name": "main",
                "lods": [
                    {
                        "name": "HD",
                        "skins": [],
                        "meshes": [1001],
                        "skeletons": [4001],
                        "blendshapes": [],
                        "controllers": [6001]
                    }
                ]
            }
        ]
    },
    "components": {
        "skeletons": [
            {
                "name": "head",
                "id": 4001,
                "root": 3001,
                "joints": [3001, 3002, 3003],
                "inverseBindMatrix": 5
            }
        ],
        "skins": [
            {
                "name": "head"
                "id": 5001,
                "skeleton": 4001,
                "mesh": 1001,
                "weights": 6
            }
        ],
        "meshes": [
            {
                "name": "head",
                "id": 1001,
                "path": "nodes/0",
```

```
          "data": [0]
        }
    ],
    "nodes": [
        {
            "name": "head"
            "id": 3001,
            "mapping": "full_body/upper_body/head"
        },
        {
            "name": "leftEye",
            "id": 3002,
            "mapping": "full_body/upper_body/head/eye_left",
            "parent": 3001,
            "translation": [-2.5345743, 150.54233, 9.711443900000001]
        },
        {
            "name": "rightEye",
            "id": 3003,
            "mapping": "full_body/upper_body/head/eye_right",
            "parent": 3001,
            "translation": [2.7856894, 150.54233, 9.7688351]
        }
    ],
    "blendshapes": [
        {
            "name": "Gaze",
            "id": 2001,
            "shapes": [1, 2, 3, 4],
            "basisMesh": 0
        }
    ],
    "controllerSets": [
        {
            "name": "gaze",
            "id": 6001,
            "controllers": [
                {
                    "name": "horizontalGaze",
```

(continued)

```
                    "id": 6011,
                    "channels": [
                        {
                            "input": 7,
                            "output": 8,
                            "target": 1,
                            "blendshapeSet": 2001,
                            "blendshapeShape": 1
                        },
                        {
                            "input": 7,
                            "output": 9,
                            "target": 1,
                            "blendshapeSet": 2001,
                            "blendshapeShape": 2
                        },
                        {
                            "input": 7,
                            "output": 10,
                            "target": 3,
                            "skin": 5001,
                            "joint": 3002
                        },
                        {
                            "input": 7,
                            "output": 10,
                            "target": 3,
                            "skin": 5001,
                            "joint": 3003
                        }
                    ]
                },
                {
                    "name": "verticalGaze",
                    "id": 6012,
                    "channels": [
                        {
                            "input": 7,
                            "output": 11,
```

```
                            "target": 1,
                            "blendshapeSet": 2001,
                            "blendshapeShape": 3
                        },
                        {
                            "input": 7,
                            "output": 12,
                            "target": 1,
                            "blendshapeSet": 2001,
                            "blendshapeShape": 4
                        },
                        {
                            "input": 7,
                            "output": 13,
                            "target": 3,
                            "skin": 5001,
                            "joint": 3002
                        },
                        {
                            "input": 7,
                            "output": 13,
                            "target": 3,
                            "skin": 5001,
                            "joint": 3003
                        }
                    ]
                }
            ]
        }
    ]
},
"data": [
    {
        "name": "head",
        "type": "model/gltf-binary",
        "uri": "head.glb"
    },
    {
        "name": "AU61_Eyes_turn_L",
```

```
        "type": "model/gltf-binary",
        "uri": "AU61_Eyes_turn_L.gib"
      },
      {
        "name": "AU61_Eyes_turn_R",
        "type": "model/gltf-binary",
        "uri": "AU61_Eyes_turn_R.gib"
      },
      {
        "name": "AU63_eyeUp",
        "type": "model/gltf-binary",
        "uri": "AU63_eyeUp.glb"
      },
      {
        "name": "AU63_eyeDown",
        "type": "model/gltf-binary",
        "uri": "AU63_eyeDown.glb"
      },
      {
        "name": "",
        "type": "dense",
        "uri": "controllers _inverseBindMatrix_5.bin",
        "offset": 0,
        "byteLength": 192,
        "dims": [3, 4, 4],
        "dtype": 10
      },
      {
        "name": "",
        "type": "dense",
        "uri": "controllers _skinning _6.bin",
        "offset": 0,
        "byteLength": 144000,
        "dims": [12000, 3],
        "dtype": 10
      },
      {
        "name": "",
        "type": "dense",
```

```
        "uri": "controllers_input_7.bin",
        "offset": 0,
        "byteLength": 12,
        "dims": [3],
        "dtype": 10
      },
      {
        "name":"",
        "type": "dense",
        "uri": "controllers_horizontalBlend1_8.bin",
        "offset": 0,
        "byteLength": 12,
        "dims": [3],
        "dtype": 10
      },
      {
        "name": "",
        "type": "dense",
        "uri": "controllers_horizontalBlend2_9.bin",
        "offset": 0,
        "byteLength": 12,
        "dims": [3],
        "dtype": 10
      },
      {
        "name": "",
        "type": "dense",
        "uri": "controllers_horizontalRotation_10.bin",
        "offset": 0,
        "byteLength": 48,
        "dims": [3, 4],
        "dtype": 10
      },
      {
        "name": "",
        "type": "dense",
        "uri": "controllers_verticalBlend1_11.bin",
        "offset": 0,
        "byteLength": 12,

        "dims": [3],
        "dtype": 10
      },
      {
        "name":"",
        "type": "dense",
        "uri": "controllers_verticalBlend2_12.bin",
        "offset": 0,
        "byteLength": 12,
        "dims": [3],
        "dtype": 10
      },
      {
        "name": "",
        "type": "dense",
        "uri": "controllers_verticalRotation_13.bin",
        "offset": 0,
        "byteLength": 48,
        "dims": [3, 4],
        "dtype": 10
      }
    ]
  }
```

**Code Listing 1.**

**Parse LOD**

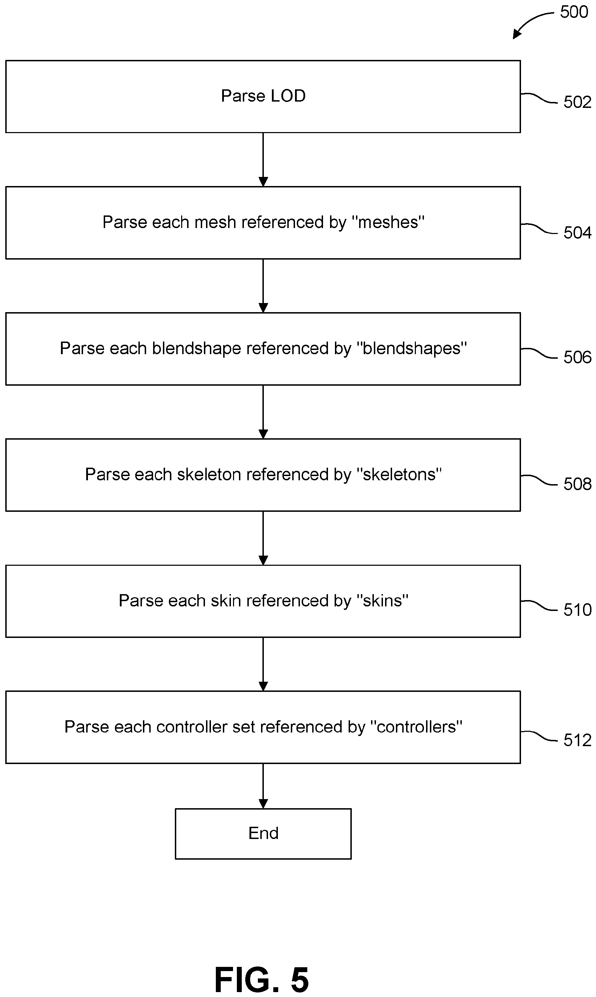

FIG. 5 is a flowchart illustrating an example process for parsing of an LOD object with the "controllers" property according to some embodiments. FIG. 5 shows an example parsing process 500. The parse LOD process 502 happens each time a level of detail (LOD) object in the ARF file is processed. In process box 504, each mesh referenced by an item in the "meshes" list is parsed. In process box 506, each blendshape referenced by an item in the "blendshapes" list is parsed. In process box 508, each skeleton referenced by an item in the "skeletons" list is parsed. In process box 510, each skin referenced by an item in the "skins" list is parsed. In process box 512, each controller set referenced by an item in the "controllers" list is parsed. Upon finishing the controller set parsing, the example parsing process 500 ends.

**Parse ControllerSet**

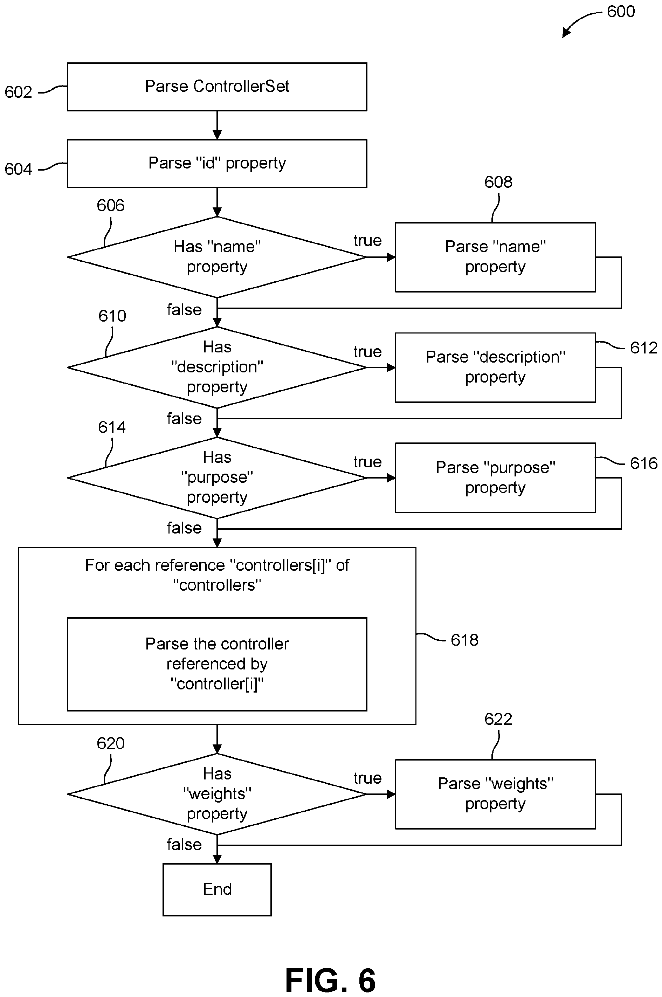

FIG. 6 is a flowchart illustrating an example process for parsing of a ControllerSet object according to some embodiments. FIG. 6 shows an example ControllerSet object parsing process 600. The parse ControllerSet process 602 happens each time a ControllerSet object in the ARF file is processed.

In process box 604, the "id" property is parsed. The "id" property must be different from the other controller sets. A determination 606 is made to determine whether the "name" property is present. If present, parse 608 the "name" property. A determination 610 is made to determine whether the "description" property is present. If present, parse 612 the "description" property. A determination 614 is made to determine whether the "purpose" property is present. If present, parse 616 the "purpose" property. For each reference "controllers[i]" of the "controllers" object, parse 618 the controller referenced by the "controllers" property. A determination 620 is made to determine whether the "weights" property is present. If present, parse 622 the "weights" property. The length of "weights" must be equal to the size of "controllers".

**Parse Controller**

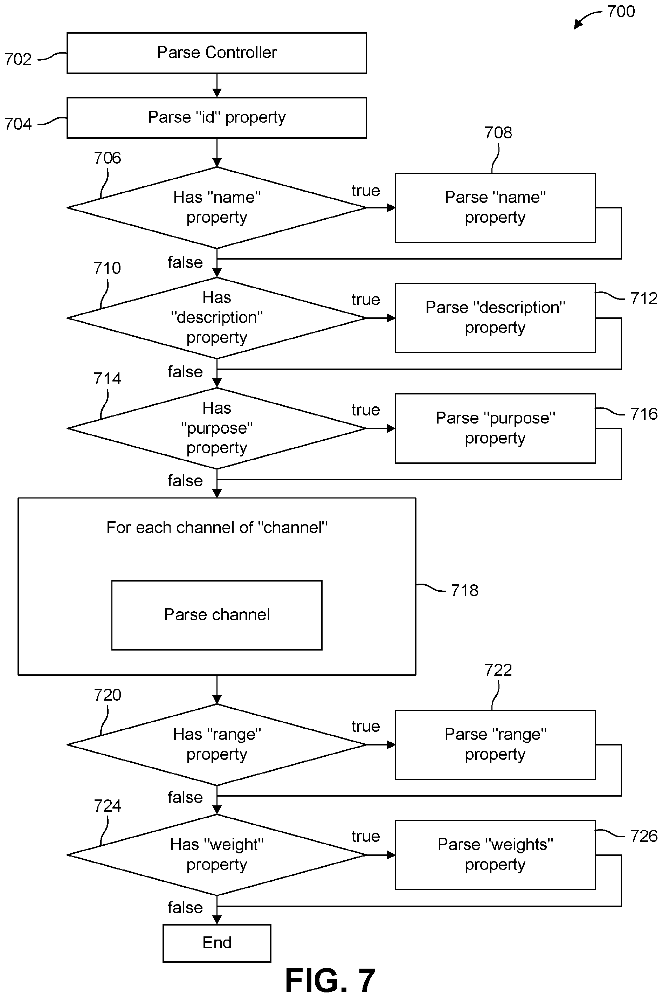

FIG. 7 is a flowchart illustrating an example process for parsing of a Controller object according to some embodiments. FIG. 7 shows an example Controller object parsing process 700. The parse Controller process 702 happens each time a Controller object in the ARF file is processed.

In process box 704, the "id" property is parsed. The "id" property must be different from the other controller sets. A determination 706 is made to determine whether the "name" property is present. If present, parse 608 the "name" property. A determination 710 is made to determine whether the "description" property is present. If present, parse 712 the "description" property. A determination 714 is made to determine whether the "purpose" property is present. If present, parse 716 the "purpose" property. For each channel of the "channel" object, parse 718 the channel property.

A determination 720 is made to determine whether the "range" property is present. If present, parse 722 the "range" property. If not present, the default value is minimum and maximum values of the inputs of the channel. A determination 724 is made to determine whether the "weights" property is present. If present, parse 726 the "weights" property. If not present, the default value is 1.0.

**Parse Channel**

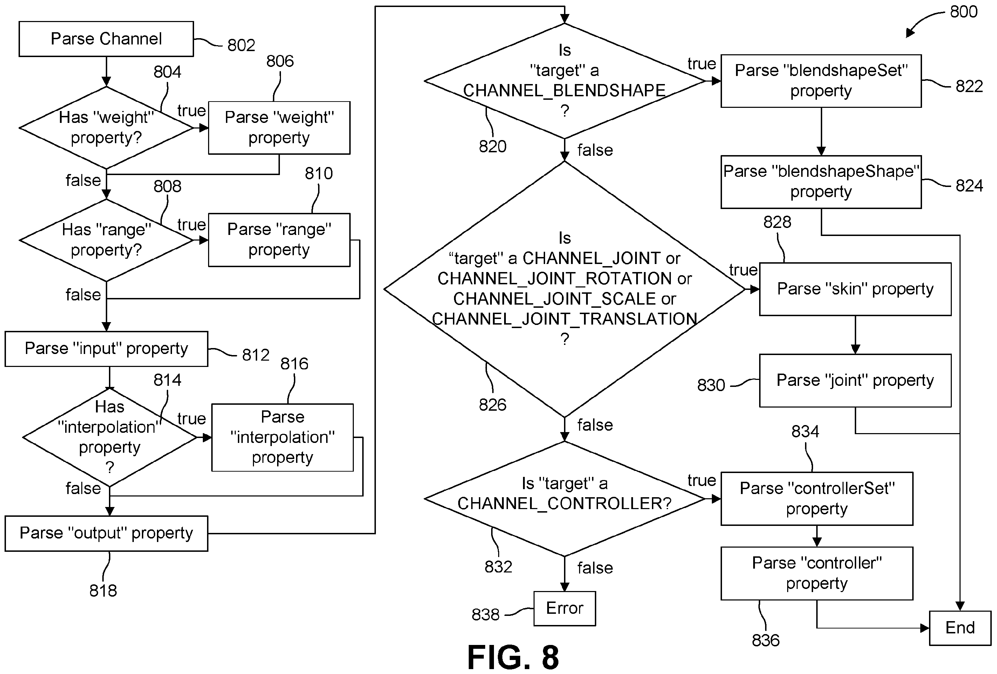

FIG. 8 is a flowchart illustrating an example process for parsing a Channel object according to some embodiments. FIG. 8 shows an example Channel object parsing process 800. The parse Channel process 802 happens each time a Channel object in the ARF file is processed.

A determination 804 is made to determine whether the "weights" property is present. If present, parse 806 the "weights" property. If not present, the default value is 1.0. A determination 808 is made to determine whether the "range" property is present. If present, parse 810 the "range" property. If not present, the default value is minimum and maximum values of the inputs of the channel. In process box 812, the "input" property is parsed. The "input" property must reference valid data.

A determination 814 is made to determine whether the "interpolation" property is present. If present, parse 816 the "interpolation" property. If not present, the default value is LINEAR_INTERPOLATION. In process box 818, the "output" property is parsed. The "input" property must reference valid data. The number of values (e.g., the first dimension of a tensor) of the output must be equal to the size of input.

A determination 820 is made to determine whether the "target" property is CHANNEL_BLENDSHAPE. If the "target" property is CHANNEL_BLENDSHAPE, parse 822 the "blendshapeSet" property and parse 824 the "blendshapeShape" property. The "blendshapeSet" property must reference a valid blendshape set, and the "blendshapeShape" must reference a valid blendshape within this set.

If the "target" property is not CHANNEL_BLENDSHAPE, a further determination 826 is made to determine the value of the "target" property. If the "target" property is CHANNEL_JOINT, CHANNEL JOINT_ROTATION, CHANNEL JOINT_SCALE or CHANNEL_JOINT_TRANSLATION, then parse 828 the "skin" property and parse 830 the "joint" property. If the "skin" property is not present, then this channel does not update the vertices of a mesh (only the joint is transformed). The "skin" property must reference a valid skin property, and the "joint" property must reference a valid node.

If the "target" property is not CHANNEL_JOINT, CHANNEL_JOINT_ROTATION, CHANNEL_JOINT_SCALE, or CHANNEL_JOINT_TRANSLATION, then a determination 832 is made to determine if the "target" property is CHANNEL_CONTROLLER. If the "target" property is CHANNEL_CONTROLLER, then parse 834 the "controllerSet" property and parse 836 the "controller" property. If "controllerSet" is not present, then the default value is the current controller set. The "controllerSet" property must reference a valid controller set, and the "controller" property must reference a valid controller within this set. If the "target" property is not CHANNEL_CONTROLLER, then an error is raised 838 because the value of the "target" property is invalid.

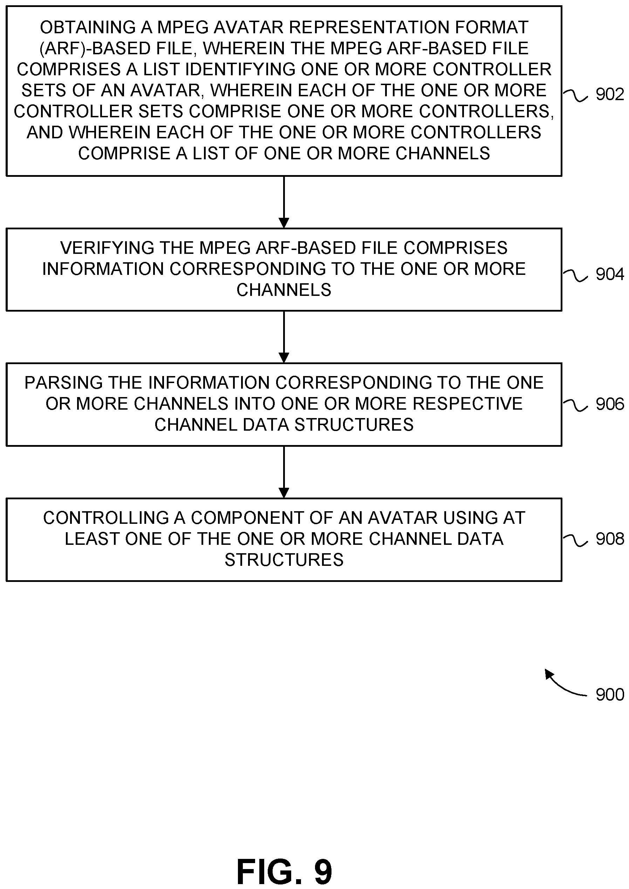

FIG. 9 is a flowchart illustrating an example process for parsing a MPEG ARF-based file according to some embodiments. For some embodiments, an example process 900 may include obtaining 902 a MPEG Avatar Representation Format (ARF)-based file, wherein the MPEG ARF-based file comprises a list identifying one or more controller sets of an avatar, wherein each of the one or more controller sets comprise one or more controllers, and wherein each of the one or more controllers comprise a list of one or more channels. For some embodiments, the example process 900 may further include verifying 904 the MPEG ARF-based file comprises information corresponding to the one or more channels. For some embodiments, the example process 900 may further include parsing 906 the information corresponding to the one or more channels into one or more respective channel data structures. For some embodiments, the example process 900 may further include controlling 908 a component of an avatar using at least one of the one or more channel data structures

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a MPEG Avatar Representation Format (ARF)-based file, wherein the MPEG ARF-based file includes a list identifying one or more controller sets of an avatar, wherein each of the one or more controller sets include one or more controllers, and wherein each of the one or more controllers include a list of one or more channels; verifying the MPEG ARF-based file includes information corresponding to the one or more channels; parsing the information corresponding to the one or more channels into one or more respective channel data structures; and controlling a component of an avatar using at least one of the one or more channel data structures.

For some embodiments of the example method, the MPEG ARF-based file includes a controllers component, and the controllers component is the list identifying the one or more controller sets of the avatar.

For some embodiments of the example method, each of the one or more controller sets of the avatar include a unique controller set identifier, and each of the unique controller set identifiers indicates an identity of the respective controller set.

For some embodiments of the example method, each of the one or more controllers include a unique controller identifier, and each of the unique controller identifiers indicates an identity of the respective controller.

For some embodiments of the example method, each of the one or more channel data structures include a weight, a range, and a target of the respective channel data structure.

Some embodiments of the example method may further include parsing at least one of the one or more channel data structures based on the target of the respective channel data structure

Some embodiments of the example method may further include identifying the target of one of the one or more channel data structures as indicating a blendshape channel; and parsing blendshape data in the corresponding channel data structure.

Some embodiments of the example method may further include: identifying the target of one of the one or more channel data structures as indicating a joint channel; and parsing joint data in the corresponding channel data structure.

Some embodiments of the example method may further include: identifying the target of one of the one or more channel data structures as indicating a controller channel; and parsing controller data in the corresponding channel data structure.

Some embodiments of the example method may further include combining data from two or more of the channel data structures to generate a combined blendshape for an asset of the avatar.

Some embodiments of the example method may further include combining data from two or more of the channel data structures to generate a combined joint for an asset of the avatar.

Some embodiments of the example method may further include combining data from two or more of the channel data structures to generate a combined skin for an asset of the avatar.

Some embodiments of the example method may further include combining data from two or more of the channel data structures to generate a combined controller for an asset of the avatar.

Some embodiments of the example method may further include: obtaining, from the MPEG ARF-based file, two or more weights corresponding to an avatar asset controller; combining the two or more weights corresponding to the controller; and controlling an asset of the avatar with the avatar asset controller using the combined weights.

An example apparatus in accordance with some embodiments may include: a processor; and a memory storing instructions operative, when executed by the processor, to cause the apparatus to perform the method of any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

   obtaining a MPEG Avatar Representation Format (ARF)-based file,

      wherein the MPEG ARF-based file comprises a list identifying one or more controller sets of an avatar,
      wherein each of the one or more controller sets comprise one or more controllers, and
      wherein each of the one or more controllers comprise a list of one or more channels;

   verifying the MPEG ARF-based file comprises information corresponding to the one or more channels;
   parsing the information corresponding to the one or more channels into one or more respective channel data structures; and
   controlling a component of an avatar using at least one of the one or more channel data structures.

2. The method of claim 1,

   wherein the MPEG ARF-based file comprises a controllers component, and
   wherein the controllers component is the list identifying the one or more controller sets of the avatar.

3. The method of any one of claims 1-2,

   wherein each of the one or more controller sets of the avatar comprise a unique controller set identifier, and
   wherein each of the unique controller set identifiers indicates an identity of the respective controller set.

4. The method of any one of claims 1-3,

   wherein each of the one or more controllers comprise a unique controller identifier, and
   wherein each of the unique controller identifiers indicates an identity of the respective controller.

5. The method of any one of claims 1-4,
   wherein each of the one or more channel data structures comprise a weight, a range, and a target of the respective channel data structure.

6. The method of claim 5, further comprising parsing at least one of the one or more channel data structures based on the target of the respective channel data structure.

7. The method of any one of claims 5-6, further comprising:

   identifying the target of one of the one or more channel data structures as indicating a blendshape channel; and
   parsing blendshape data in the corresponding channel data structure.

8. The method of any one of claims 5-7, further comprising:

   identifying the target of one of the one or more channel data structures as indicating a joint channel; and
   parsing joint data in the corresponding channel data structure.

9. The method of any one of claims 5-8, further comprising:

identifying the target of one of the one or more channel data structures as indicating a controller channel; and parsing controller data in the corresponding channel data structure.

10. The method of any one of claims 1-9, further comprising combining data from two or more of the channel data structures to generate a combined blendshape for an asset of the avatar.

11. The method of any one of claims 1-10, further comprising combining data from two or more of the channel data structures to generate a combined joint for an asset of the avatar.

12. The method of any one of claims 1-11, further comprising combining data from two or more of the channel data structures to generate a combined skin for an asset of the avatar.

13. The method of any one of claims 1-12, further comprising combining data from two or more of the channel data structures to generate a combined controller for an asset of the avatar.

14. The method of any one of claims 1-13, further comprising:

obtaining, from the MPEG ARF-based file, two or more weights corresponding to an avatar asset controller; combining the two or more weights corresponding to the controller; and controlling an asset of the avatar with the avatar asset controller using the combined weights.

15. An apparatus comprising:

a processor; and a memory storing instructions operative, when executed by the processor, to cause the apparatus to perform the method of any one of claims 1 through 14.

**FIG. 1**

EP 4 776 228 A1

**FIG. 2**

FIG. 3

FIG. 5

600

602 — Parse ControllerSet

604 — Parse "id" property

606 — Has "name" property

true → Parse "name" property 608

false

610 — Has "description" property

true → Parse "description" property 612

false

614 — Has "purpose" property

true → Parse "purpose" property 616

false

For each reference "controllers[i]" of "controllers"

Parse the controller referenced by "controller[i]"

618

620 — Has "weights" property

true → Parse "weights" property 622

false

End

**FIG. 6**

FIG. 7

**FIG. 8**

OBTAINING A MPEG AVATAR REPRESENTATION FORMAT (ARF)-BASED FILE, WHEREIN THE MPEG ARF-BASED FILE COMPRISES A LIST IDENTIFYING ONE OR MORE CONTROLLER SETS OF AN AVATAR, WHEREIN EACH OF THE ONE OR MORE CONTROLLER SETS COMPRISE ONE OR MORE CONTROLLERS, AND WHEREIN EACH OF THE ONE OR MORE CONTROLLERS COMPRISE A LIST OF ONE OR MORE CHANNELS — 902

VERIFYING THE MPEG ARF-BASED FILE COMPRISES INFORMATION CORRESPONDING TO THE ONE OR MORE CHANNELS — 904

PARSING THE INFORMATION CORRESPONDING TO THE ONE OR MORE CHANNELS INTO ONE OR MORE RESPECTIVE CHANNEL DATA STRUCTURES — 906

CONTROLLING A COMPONENT OF AN AVATAR USING AT LEAST ONE OF THE ONE OR MORE CHANNEL DATA STRUCTURES — 908

— 900

# FIG. 9

Europäisches
Patentamt

European
Patent Office

Office européen
des brevets

# EUROPEAN SEARCH REPORT

**Application Number**

EP 25 30 5036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JOAO REGATEIRO (INTERDIGITAL) ET AL: "[42] [SD] - Avatar Representation and Coding Format Specification", 147. MPEG MEETING; 20240715 - 20240719; SAPPORO; (MOTION PICTURE EXPERT GROUP OR ISO/IEC JTC1/SC29/WG11), , no. m68266 24 June 2024 (2024-06-24), XP030319943, Retrieved from the Internet: URL:https://dms.mpeg.expert/doc_end_user/d ocuments/147_Sapporo/wg11/m68266-v1-m68266 _avatar_new_working_item.zip m68266_avatar_new_working_item.docx [retrieved on 2024-06-24] | 1,2,15 | INV. G06T13/00 G06T17/00 H04N21/81 H04N21/854 |
| Y | * Sec. 1, Sec. 2, Sec. 3; figures 2, 3 * | 3-14 | |
| | ----- | | |
| Y | JOAO REGATEIRO (INTERDIGITAL) ET AL: "Carriage Format for Transmission of Animation Data", 148. MPEG MEETING; 20241104 - 20241108; KEMER; (MOTION PICTURE EXPERT GROUP OR ISO/IEC JTC1/SC29/WG11), , no. m69422 6 September 2024 (2024-09-06), XP030327470, Retrieved from the Internet: URL:https://dms.mpeg.expert/doc_end_user/d ocuments/148_Kemer/wg11/m69422-v1-m69422_A nimation_Carriage_Format.zip m69422_Animation_Carriage_Format.docx [retrieved on 2024-09-06] * Sec. 1; figure 1 * | 10-14 | TECHNICAL FIELDS SEARCHED (IPC) H04N G06T |
| | ----- | | |
| | -/-- | | |

The present search report has been drawn up for all claims

| Place of search | Date of completion of the search | Examiner |
|---|---|---|
| Munich | 12 June 2025 | Morawski, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................................................
& : member of the same patent family, corresponding document

EPO FORM 1503 03.82 (P04C01)

page 1 of 5

**EUROPEAN SEARCH REPORT**

Application Number

EP 25 30 5036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | "WD of ISO/IEC 23090-39 Avatar representation formats", 148. MPEG MEETING; 20241104 - 20241108; KEMER; (MOTION PICTURE EXPERT GROUP OR ISO/IEC JTC1/SC29/WG11), , no. n24542 16 December 2024 (2024-12-16), XP030327297, Retrieved from the Internet: URL:https://dms.mpeg.expert/doc_end_user/d ocuments/148_Kemer/wg11/MDS24542_WG03_N013 98.zip MDS24542_N01398_WG03_WD_23090-39_final_rm. docx [retrieved on 2024-12-16] * Sec. 6, Sec. 7; figure first figure of Sec. 6 Avatar Data Model * | 3,4 | |
| Y | The Khronos 3d Formats Working Group: "glTF(TM) 2.0 Specification", , 11 October 2021 (2021-10-11), XP093115398, Retrieved from the Internet: URL:https://registry.khronos.org/glTF/spec s/2.0/glTF-2.0.html [retrieved on 2024-01-02] * Sec. 3.11, pg. 55; Sec. 5.6, pg. 71 * | 5-9 | TECHNICAL FIELDS SEARCHED (IPC) |

-----

-----

-/--

The present search report has been drawn up for all claims

| Place of search | Date of completion of the search | Examiner |
|---|---|---|
| Munich | 12 June 2025 | Morawski, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 30 5036

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | IMED BOUAZIZI ET AL: "MPEG Avatar Representation Format", 148. MPEG MEETING; 20241104 - 20241108; KEMER; (MOTION PICTURE EXPERT GROUP OR ISO/IEC JTC1/SC29/WG11), , no. m69882 28 October 2024 (2024-10-28), XP030328526, Retrieved from the Internet: URL:https://dms.mpeg.expert/doc_end_user/d ocuments/148_Kemer/wg11/m69882-v1-m69882.z ip m69882_MPEG Avatar Representation Format_v0.9.docx [retrieved on 2024-10-28] * Sec. 6.1; figure First figure of Sec. 4 * ----- | 10,12 | |
| A | JOAO REGATEIRO (INTERDIGITAL) ET AL: "Avatar JSON Interchangeable Format high level overview", 148. MPEG MEETING; 20241104 - 20241108; KEMER; (MOTION PICTURE EXPERT GROUP OR ISO/IEC JTC1/SC29/WG11), , no. m69474 5 November 2024 (2024-11-05), XP030327590, Retrieved from the Internet: URL:https://dms.mpeg.expert/doc_end_user/d ocuments/148_Kemer/wg11/m69474-v2-m69474_A vatar_JSON_Interchangeable_Format_v2.zip m69474_Avatar_JSON_Interchangeable_Format_ v2.docx [retrieved on 2024-11-05] ----- -/-- | 2 | TECHNICAL FIELDS SEARCHED (IPC) |

The present search report has been drawn up for all claims

| Place of search | Date of completion of the search | Examiner |
|---|---|---|
| Munich | 12 June 2025 | Morawski, Igor |

EPO FORM 1503 03.82 (P04C01)

Europäisches
Patentamt

European
Patent Office

Office européen
des brevets

## EUROPEAN SEARCH REPORT

Application Number

EP 25 30 5036

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOAO REGATEIRO (INTERDIGITAL) ET AL: "Avatar JSON Interchangeable Format", 148. MPEG MEETING; 20241104 - 20241108; KEMER; (MOTION PICTURE EXPERT GROUP OR ISO/IEC JTC1/SC29/WG11), , no. m69421 5 November 2024 (2024-11-05), XP030327469, Retrieved from the Internet: URL:https://dms.mpeg.expert/doc_end_user/d ocuments/148_Kemer/wg11/m69421-v2-m69421_A vatar_JSON_Interchangeable_Format_v2.zip m69421_Avatar_JSON_Interchangeable_Format_ v2.docx [retrieved on 2024-11-05] * Sec. 1, Sec. 2 * ----- | 1-15 | |
| A | JOAO REGATEIRO (INTERDIGITAL) ET AL: "Towards an interoperable avatar representation", 145. MPEG MEETING; 20240122 - 20240126; ONLINE; (MOTION PICTURE EXPERT GROUP OR ISO/IEC JTC1/SC29/WG11), , no. m66450 17 January 2024 (2024-01-17), XP030315886, Retrieved from the Internet: URL:https://dms.mpeg.expert/doc_end_user/d ocuments/145_OnLine/wg11/m66450-v1-Interop erableAvatarRepresentation_v2.zip Interoperable Avatar Representation_v2.docx [retrieved on 2024-01-17] * Sec. 2. c, Sec. 3 * ----- -/-- | 1-15 | **TECHNICAL FIELDS SEARCHED (IPC)** |

The present search report has been drawn up for all claims

| Place of search | Date of completion of the search | Examiner |
|---|---|---|
| Munich | 12 June 2025 | Morawski, Igor |

EPO FORM 1503 03.82 (P04C01)

Europäisches Patentamt

European Patent Office

Office européen des brevets

## EUROPEAN SEARCH REPORT

Application Number

EP 25 30 5036

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | AVRIL QUENTIN ET AL: "MORGAN: MPEG Original Reference Geometric Avatar Neutral", 29TH ACM SYMPOSIUM ON VIRTUAL REALITY SOFTWARE AND TECHNOLOGY, ACMPUB27, NEW YORK, NY, USA, 9 October 2023 (2023-10-09), pages 1-10, XP059457233, DOI: 10.1145/3611314.3615909 ISBN: 979-8-4007-0328-7 * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| Munich | 12 June 2025 | Morawski, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

**REFERENCES CITED IN THE DESCRIPTION**

**Patent documents cited in the description**

- EP 23305405 A
- EP 2024057092 W
- EP 23306167 A
- EP 2024068034 W
- EP 24305094 A
- EP 2024078214 W
- EP 24305458 A
- EP 24306850 A